# EUROPEAN PATENT APPLICATION

(11) **EP 4 704 421 A1**
(43) Date of publication of application: **04.03.2026**
(21) Application number: 24795840.8
(22) Date of filing: 10.04.2024
(51) Int. Cl.: H04N 21/2187

(54) **INFORMATION PROCESSING METHOD AND APPARATUS, DEVICE AND STORAGE MEDIUM**

(30) Priority: 27.04.2023 CN 202310474964
(71) Applicant: Beijing Zitiao Network Technology Co., Ltd., Beijing 100190 (CN)
(72) Inventor: LV, Peng, Beijing 100028 (CN)
(74) Representative: Marks & Clerk LLP
(86) International application number: PCT/CN2024/087069
(87) International publication number: WO 2024/222459

(57) **Abstract**

Examples of the disclosure provide a method and apparatus for processing information, a device, and a storage medium. The method includes: obtaining a plurality of pieces of subtitle information corresponding to a plurality of co-streaming clients, where the subtitle information carries co-streaming client identifiers and/or object identifiers corresponding to the co-streaming clients, and the subtitle information is determined by audio data of the co-streaming clients; and transmitting the plurality of pieces of subtitle information to a target client, such that the target client displays the plurality of pieces of subtitle information differently according to the co-streaming client identifiers and/or the object identifiers.

## Description

### CROSS-REFERENCE TO RELATED APPLICATION(S)

The present application claims the priority of Chinese Patent Application No. 202310474964.9, filed on April 27, 2023 and entitled "Processing Information Method and Apparatus, Device, and Storage Medium", which is incorporated in its entirety herein by reference.

### FIELD

Examples of the disclosure relates to the field of live stream information processing, and particularly relates to a method and apparatus, a device, and a storage medium for processing information.

### BACKGROUND

In a live co-streaming scenario, subtitles are added to the live stream in order to improve the viewing experience of users. In the related technologies, when a plurality of users joining the co-streaming speak simultaneously, the subtitle display effect fails to satisfy the demand of the users and affects the user experience.

### SUMMARY

Examples of the disclosure provide a method and apparatus, a device, and a storage medium for processing information, which can improve accuracy of subtitle display in a live co-streaming process.

In a first aspect, the examples of the disclosure provide a method for processing information. The method includes:
obtaining a plurality of pieces of subtitle information corresponding to a plurality of co-streaming clients, wherein the subtitle information carries co-streaming client identifiers and/or object identifiers corresponding to the co-streaming clients, and the subtitle information is determined by audio data of the co-streaming clients; and
transmitting the plurality of pieces of subtitle information to a target client, such that the target client displays the plurality of pieces of subtitle information differently according to the object identifiers.

In a second aspect, the examples of the disclosure further provide an apparatus for processing information. The apparatus includes:
a subtitle information obtaining module configured to obtain a plurality of pieces of subtitle information corresponding to a plurality of co-streaming clients, wherein the subtitle information carries co-streaming client identifiers and/or object identifiers corresponding to the co-streaming clients, and the subtitle information is determined by audio data of the co-streaming clients; and
a subtitle information transmitting module configured to transmit the plurality of pieces of subtitle information to a target client, such that the target client displays the plurality of pieces of subtitle information differently according to the object identifiers.

In a third aspect, the examples of the disclosure further provide an electronic device. The electronic device includes:
one or more processors, and
a storage apparatus configured to store one or more programs,
when executed by the one or more processors, the one or more programs cause the one or more processors to perform the method for processing information according to the examples of the disclosure.

In a fourth aspect, the examples of the disclosure further provide a storage medium. The storage medium includes a computer-executable instruction. The computer-executable instruction is configured to execute the method for processing information according to the examples of the disclosure when executed by a computer processor.

The method and apparatus, the device, and the storage medium for processing information are disclosed in the examples of the disclosure. The method includes: obtaining a plurality of pieces of subtitle information corresponding to a plurality of co-streaming clients, where the subtitle information carries co-streaming client identifiers and/or object identifiers corresponding to the co-streaming clients, and the subtitle information is determined by audio data of the co-streaming clients; and transmitting the plurality of pieces of subtitle information to a target client, such that the target client displays the plurality of pieces of subtitle information differently according to the co-streaming client identifiers and/or the object identifiers.

### BRIEF DESCRIPTION OF THE DRAWINGS

The above and other features, advantages, and aspects of examples of the disclosure will become more apparent with reference to the following particular embodiments in conjunction with the drawings. The same or similar reference numerals refer to the same or similar elements throughout the drawings. It should be understood that the drawings are schematic, and that the parts and elements are not necessarily drawn to scale.
FIG. 1 is a schematic flowchart of a method for processing information according to an example of the disclosure;
FIG. 2 is a schematic diagram of processing subtitle information according to an example of the disclosure;
FIG. 3 is a schematic diagram of processing subtitle information according to an example of the disclosure;
FIG. 4 is a schematic diagram of processing subtitle information according to an example of the disclosure;
FIG. 5 is a schematic diagram of displaying subtitle information according to an example of the disclosure;
FIG. 6 is a schematic diagram of displaying subtitle information according to an example of the disclosure;
FIG. 7 is a schematic structural diagram of an apparatus for processing information according to an example of the disclosure; and
FIG. 8 is a schematic structural diagram of an electronic device according to an example of the disclosure.

### DETAILED DESCRIPTION OF EMBODIMENTS

Examples of the disclosure are described in more detail below with reference to the drawings. Although some examples of the disclosure are shown in the drawings, it should be understood that the disclosure may be embodied in various forms and should not be construed as being limited to the examples set forth herein. On the contrary, these examples are provided, such that the disclosure will be understood more thoroughly and completely. It should be understood that the drawings and examples of the disclosure are for illustrative purposes merely and are not intended to limit the scope of protection of the disclosure.

It should be understood that various steps recited in the method embodiments of the disclosure can be executed in different orders and/or in parallel. Furthermore, the method embodiments can include additional steps and/or omit to execute the illustrated steps. The scope of the disclosure is not limited in this respect.

As used herein, the term "comprise" or "include" and their variations are open-ended, that is, "comprise but not limited to" and "include but not limited to". The term "based on" is "based at least in part on". The term "an example" means "at least one example". The term "another example" means "at least one further example". The term "some examples" means "at least some examples". Definitions for other terms are given in the description below.

It should be noted that concepts such as "first" and "second" mentioned in the disclosure are merely used to distinguish different apparatuses, modules or units, and are not used to limit the order of functions executed by these apparatuses, modules or units or their interdependence.

It should be noted that the modification with "a", "an" or "a plurality of" in the present disclosure is intended to be illustrative rather than limitative, and should be understood by those skilled in the art as "one or more" unless the context clearly dictates otherwise.

The names of messages or information exchanged between a plurality of apparatuses in the embodiments of the disclosure are merely for illustrative purposes, and are not intended to limit the scope of these messages or information.

It can be understood that before the technical solutions disclosed in examples of the disclosure are used, a user should be notified of a type, use scope, use scenario, etc. of personal information involved in the disclosure in an appropriate manner according to relevant laws and regulations, and authorization from the user should be acquired.

For example, in response to receiving an active request from the user, prompt information is transmitted to the user, so as to explicitly prompt the user that a to-be-executed operation requested by the user will require acquisition and use of the personal information of the user. Therefore, according to the prompt information, the user can autonomously select whether to provide the personal information for software or hardware, such as an electronic device, an application, a server, and a storage medium, which executes operations of the technical solutions of the disclosure.

As an optional but non-restrictive embodiment, in response to receiving an active request from the user, prompt information is transmitted to the user through a pop-up window. For example, the prompt information may be presented in the pop-up window in a form of text. In addition, the pop-up window may also carry a selection control for the user to select whether to "agree" or "disagree" to provide the personal information for the electronic device.

It can be understood that the above notification and user authorization acquisition processes are merely illustrative, and do not limit the embodiments of the disclosure. Other methods satisfying the relevant laws and regulations can also be applied to the embodiments of the disclosure.

It should be understood that data involved in the technical solutions (including but not limited to the data, obtainment or use of the data) should comply with requirements of corresponding laws, regulations and relevant provisions.

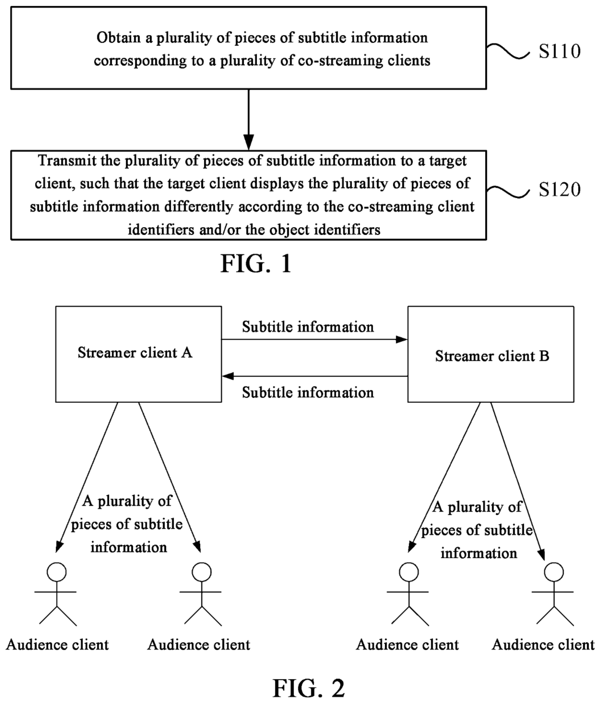

FIG. 1 is a schematic flowchart of a method for processing information according to an example of the disclosure. The example of the disclosure is applicable to a situation of displaying subtitles in a live co-streaming. The method may be executed by an apparatus for processing information. The apparatus may be implemented through software and/or hardware. Optionally, the apparatus may be implemented through an electronic device, which may be a mobile terminal, a PC terminal, or a server, etc.

As shown in FIG. 1, the method includes:
S110, a plurality of pieces of subtitle information corresponding to a plurality of co-streaming clients are obtained.

S120, the plurality of pieces of subtitle information are transmitted to a target client, such that the target client displays the plurality of pieces of subtitle information differently according to the co-streaming client identifiers and/or the object identifiers.

The subtitle information carries co-streaming client identifiers and/or object identifiers corresponding to the co-streaming clients. The subtitle information is determined by audio data of the co-streaming clients. The object identifiers corresponding to the co-streaming clients may be understood as identifiers of users performing a live co-streaming through the co-streaming clients. The subtitle information may be represented as object identifier: subtitle content.

The co-streaming clients may be understood as clients participating in a co-streaming. In an application scenario, a plurality of co-streaming clients may all be co-streaming streamer clients. Illustratively, a plurality of streamers create live rooms on their respective clients, and then start a co-streaming, which may be co-streaming player killing (PK), such as game PK, singing PK, etc. In another application scenario, the plurality of co-streaming clients include one co-streaming streamer client and at least one co-streaming guest client. Illustratively, a streamer creates a live room on a client for live streaming, and other users enter the live room to watch the live streaming of the streamer, such that the users become audience. In a case that an audience applies to the streamer for a co-streaming and the co-streaming succeeds, the audience becomes a guest, and a client where the audience is located becomes a co-streaming guest client. In another application scenario, the plurality of co-streaming clients include a plurality of co-streaming streamer clients and at least one co-streaming guest client. Illustratively, a plurality of streamers create live rooms on their respective clients, and then start a co-streaming, which may be co-streaming player killing (PK). Audience in the live rooms where the streamers are located may apply for co-streaming, and then the audience become co-streaming guests. Clients where the audience are located become co-streaming guest clients.

In an example, the plurality of co-streaming clients include a target co-streaming streamer client. The method is executed by the target co-streaming streamer client. The plurality of pieces of subtitle information corresponding to the plurality of co-streaming clients may be obtained as follows: first subtitle information is determined according to audio data of the target co-streaming streamer client; and second subtitle information transmitted by other co-streaming clients except for the target co-streaming streamer client in the plurality of co-streaming clients is received.

The other co-streaming clients may be co-streaming streamer clients or co-streaming guest clients. The first subtitle information is obtained from the audio data of the target co-streaming streamer client. The second subtitle information is obtained from the audio data of the other co-streaming clients. The obtained second subtitle information is transmitted to the target co-streaming streamer client. The subtitle information of each co-streaming client may be obtained from its own audio data. A known technique may be used to obtain subtitles from the audio data, which is not repeated herein.

Optionally, the plurality of co-streaming clients are a plurality of co-streaming streamer clients. The target co-streaming streamer client is any co-streaming streamer client in the plurality of co-streaming streamer clients. The second subtitle information transmitted by the other co-streaming clients except for the target co-streaming streamer client in the plurality of co-streaming clients may be received as follows: second subtitle information transmitted by other co-streaming streamer clients except for the target co-streaming streamer client in the plurality of co-streaming streamer clients is received. Correspondingly, the plurality of pieces of subtitle information may be transmitted to the target client as follows: the first subtitle information and the second subtitle information are transmitted to an audience client corresponding to the target co-streaming streamer client.

The audience client corresponding to the target co-streaming streamer client may be understood as a client where the audience in the live room created by the target co-streaming streamer client is located. In the application scenario, the plurality of co-streaming clients are a plurality of co-streaming streamer clients. For each co-streaming streamer client, each co-streaming streamer client processes audio data of the co-streaming streamer client separately, obtains corresponding subtitle information, and then transmits the subtitle information to other co-streaming streamer clients. Each streamer client transmits locally determined first subtitle information and received second subtitle information to the audience client corresponding to the streamer client.

Illustratively, FIG. 2 is a schematic diagram of processing subtitle information in the example. As shown in FIG. 2, in the application scenario, two co-streaming clients are co-streaming streamer clients, that is, a streamer client A and a streamer client B. The streamer client A processes its audio data, obtains subtitle information, and then transmits the subtitle information to the streamer client B in a format of {"identifier of streamer client A": "subtitle content"}. Similarly, the streamer client B processes its audio data, obtains subtitle information, and then transmits the subtitle information to the streamer client A in a format of {"identifier of streamer client B": "subtitle content"}. The streamer client A transmits {"identifier of streamer client A": "subtitle content"} and {"identifier of streamer client B": "subtitle content"} transmitted by the streamer client B to an audience client in a live room where the streamer client A is located. Similarly, the streamer client B transmits {"identifier of streamer client B": "subtitle content"} and {"identifier of streamer client A": "subtitle content"} transmitted by the streamer client A to an audience client in a live room where the streamer client B is located.

Optionally, the plurality of co-streaming clients include one co-streaming streamer client and at least one co-streaming guest client. The target co-streaming streamer client is the co-streaming streamer client. the second subtitle information transmitted by the other co-streaming clients except for the target co-streaming streamer client in the plurality of co-streaming clients may be received as follows: second subtitle information transmitted by the at least one co-streaming guest client is received. Correspondingly, the plurality of pieces of subtitle information may be transmitted to the target client as follows: the first subtitle information and the second subtitle information are transmitted to an audience client corresponding to the target co-streaming streamer client and the at least one co-streaming guest client.

In the application scenario, the co-streaming streamer client processes its audio data to obtain the first subtitle information. The co-streaming guest client processes its audio data separately, obtains the second subtitle information, and transmits the second subtitle information to the co-streaming streamer client. The co-streaming streamer client transmits the first subtitle information and the second subtitle information to the audience client and the co-streaming guest client that are located in the same live room as the co-streaming streamer client through the server.

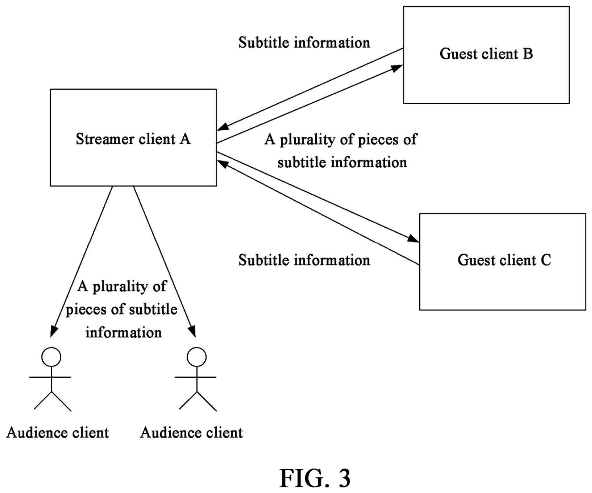

Illustratively, FIG. 3 is a schematic diagram of processing subtitle information in the example. As shown in FIG. 3, in the application scenario, the plurality of co-streaming clients include one co-streaming streamer client and two co-streaming guest clients, that is, a streamer client A, a guest client B and a guest client C respectively. The streamer client A processes its audio data and obtains subtitle information. The guest client B processes its audio data, obtains subtitle information, and then transmits the subtitle information to the streamer client A in a format of {"identifier of guest client B": "subtitle content"}. Similarly, the guest client C processes its audio data, obtains subtitle information, and then transmits the subtitle information to the streamer client A in a format of {"identifier of guest client C": "subtitle content"}. The streamer client A transmits the {"identifier of streamer client A": "subtitle content"}, the {"identifier of guest client B": "subtitle content"} transmitted by the guest client B, and the {"identifier of guest client C": "subtitle content"} transmitted by the guest client C to an audience client, the guest client B and the guest client C in a live room.

Optionally, the plurality of co-streaming clients include a plurality of co-streaming streamer clients and at least one co-streaming guest client. The target co-streaming streamer client is any co-streaming streamer client in the plurality of co-streaming streamer clients. The second subtitle information transmitted by other co-streaming clients except for the target co-streaming streamer client in the plurality of co-streaming clients may be received as follows: second subtitle information transmitted by other co-streaming streamer clients except for the target co-streaming streamer client in the plurality of co-streaming clients and the at least one co-streaming guest client is received. Correspondingly, the plurality of pieces of subtitle information may be transmitted to the target client as follows: the first subtitle information and the second subtitle information are transmitted to an audience client corresponding to the target co-streaming streamer client and a co-streaming guest client corresponding to the target co-streaming streamer client.

Specifically, in a case that the plurality of co-streaming clients include a plurality of co-streaming streamer clients, each co-streaming streamer client executes the following processes: first subtitle information is determined according to audio data of a local side, and second subtitle information transmitted by opposite sides (other sides except for the local side in the co-streaming clients) is received. That is to say, each co-streaming streamer client serving as a target co-streaming streamer client executes the following processes: first subtitle information is determined according to audio data of the target co-streaming streamer client; and second subtitle information transmitted by other co-streaming clients except for the target co-streaming streamer client in the plurality of co-streaming clients is received.

In the application scenario, the plurality of co-streaming streamer clients and the at least one co-streaming guest client process their audio data respectively and obtain subtitle information. For each co-streaming streamer client, the subtitle information determined locally is taken as the first subtitle information, the subtitle information received from other co-streaming streamer clients and the co-streaming guest client is taken as the second subtitle information, and finally the first subtitle information and the second subtitle information are transmitted to the audience client and the co-streaming guest client corresponding to the co-streaming streamer client.

Specifically, when the method is executed by the target co-streaming streamer client, the plurality of pieces of subtitle information is transmitted to the target client. Specifically, the target co-streaming streamer client may transmit the plurality of pieces of subtitle information to the target client through a server. That is, the plurality of pieces of subtitle information is transmitted to the server, and the server transmits the plurality of pieces of subtitle information to the target client.

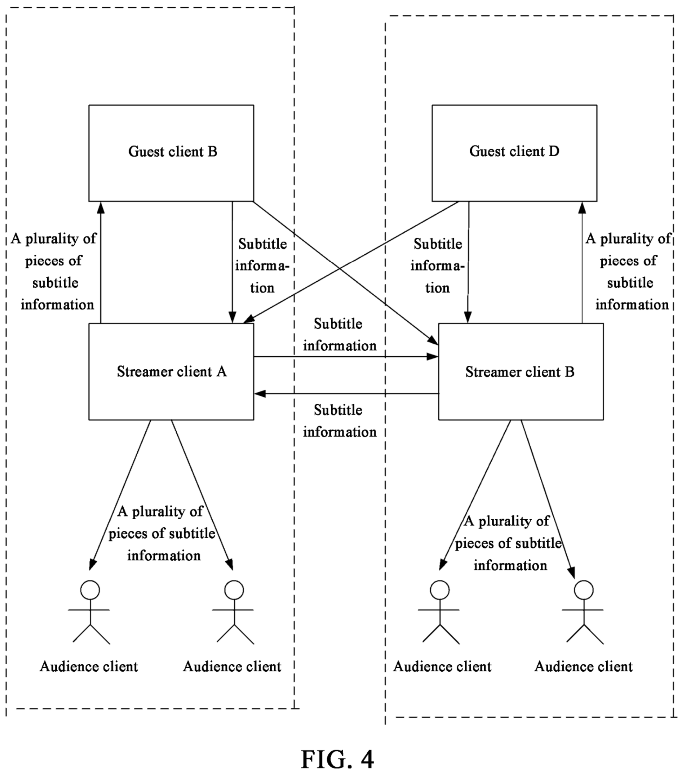

Illustratively, FIG. 4 is a schematic diagram of processing subtitle information in the example. As shown in FIG. 4, in the application scenario, the plurality of co-streaming clients include two co-streaming streamer clients and two co-streaming guest clients, that is, a streamer client A, a streamer client B, a guest client C and a guest client D respectively. The guest client C is located in a live room of the streamer client A, and the guest client D is located in a live room of the streamer client B. The streamer client A processes its audio data, obtains subtitle information, and transmits the subtitle information to the streamer client B in a format of {"identifier of streamer client A": "subtitle content"}. The streamer client B processes its audio data, obtains subtitle information, and then transmits the subtitle information to the streamer client A in a format of {"identifier of streamer client B": "subtitle content"}. The guest client C processes its audio data, obtains subtitle information, and then transmits the subtitle information to the streamer client A and the streamer client B in a format of {"identifier of guest client C": "subtitle content"}. The guest D processes its audio data, obtains subtitle information, and then transmits the subtitle information to the streamer client A and the streamer client B in a format of {"identifier of guest D": "subtitle content"}. The streamer client A transmits the {"identifier of streamer client A": "subtitle content"}, the {"identifier of streamer client B": "subtitle content"} transmitted by the streamer client B, the {"identifier of guest client C": "subtitle content"} transmitted by the guest client C, and the {"identifier of guest client D": "subtitle content"} transmitted by the guest client D to an audience client and the guest client C in a live room where the streamer client A is located, such that a plurality of pieces of subtitle information is displayed on the streamer client A, and the audience client and the guest client C in the live room where the streamer client A is located. The streamer client B transmits the {"identifier of streamer client A": "subtitle content"}, the {"identifier of streamer client B": "subtitle content"} transmitted by the streamer client B, the {"identifier of guest client C": "subtitle content"} transmitted by the guest client C, and the {"identifier of guest client D": "subtitle content"} transmitted by the guest client D to an audience client and the guest client D in a live room where the streamer client B is located, such that a plurality of pieces of subtitle information is displayed on the streamer client B, and the audience client and the guest client D in the live room where the streamer client B is located.

Optionally, the method is performed by a server. The plurality of pieces of subtitle information corresponding to a plurality of co-streaming clients may be obtained as follows: subtitle information transmitted respectively by the plurality of co-streaming clients is received, and the plurality of pieces of subtitle information are obtained. Correspondingly, the plurality of pieces of subtitle information may be merged as follows: the plurality of pieces of subtitle information is merged by the server. Correspondingly, the plurality of pieces of subtitle information may be transmitted to the target client, such that the target client can display the plurality of pieces of subtitle information differently according to the object identifiers. Specifically, the server transmits the plurality of pieces of subtitle information to the target client, such that the target client can display the plurality of pieces of subtitle information differently according to the object identifiers. Specifically, in a case that the method is executed by the server, the plurality of pieces of subtitle information is transmitted to the target client, and the server may directly transmit the plurality of pieces of subtitle information to the target client.

In the example, the plurality of clients participating in the co-streaming process their audio data respectively, obtain subtitle information, the co-streaming client identifiers and/or the object identifiers to the subtitle information, and then transmit the subtitle information carrying the co-streaming client identifiers and/or the object identifiers to the server. After receiving the subtitle information transmitted by the plurality of co-streaming clients, the server transmits the plurality of pieces of subtitle information to the target client, such that the target client displays the subtitle information differently according to the co-streaming client identifiers and/or the object identifiers. In the example, the subtitle information is merged by the server, such that transmission times of a data stream can be reduced, and bandwidth is saved.

Optionally, the method further includes: an audio and video mixed stream corresponding to the plurality of co-streaming clients is obtained. The audio and video mixed stream may be understood as being obtained by mixing audio and video streams of the plurality of co-streaming clients.

Optionally, the plurality of co-streaming clients include a target co-streaming streamer client. The method is executed by the target co-streaming streamer client. The audio and video mixed stream includes a first audio and video stream and a second audio and video stream. The audio and video mixed stream corresponding to the plurality of co-streaming clients may be obtained as follows: the first audio and video stream of the target co-streaming streamer client is obtained; and second audio and video streams transmitted by other co-streaming clients except for the target co-streaming streamer client in the plurality of co-streaming clients are received.

The other co-streaming clients may be co-streaming streamer clients or co-streaming guest clients. The first audio and video stream is an audio and video stream of the target co-streaming streamer client. The second subtitle information is audio and video streams of other co-streaming clients. The second audio and video streams are transmitted to the target co-streaming streamer client. The target co-streaming streamer client mixes the first audio and video stream and the second audio and video streams to obtain the audio and video mixed stream.

Optionally, the plurality of co-streaming clients are a plurality of co-streaming streamer clients. The target co-streaming streamer client is any co-streaming streamer client in the plurality of co-streaming streamer clients. The second audio and video stream transmitted by the other co-streaming clients except for the target co-streaming streamer client in the plurality of co-streaming clients may be received as follows: second audio and video streams transmitted by other co-streaming streamer clients except for the target co-streaming streamer client in the plurality of co-streaming streamer clients are received.

In the application scenario, the plurality of co-streaming clients are a plurality of co-streaming streamer clients. For each co-streaming streamer client, an audio and video stream of each co-streaming streamer client is transmitted to other co-streaming streamer clients. Each co-streaming streamer client mixes a local first audio and video stream with a received second audio and video stream, and obtains the audio and video mixed stream. Illustratively, the plurality of co-streaming clients are two co-streaming streamer clients, that is, a streamer client A and a streamer client B. As for an audio stream a of the streamer client A, the audio stream a is transmitted to the streamer client B. As for an audio and video stream b of the streamer client B, the audio and video stream b is transmitted to the streamer client A. The streamer client A mixes the audio stream a and the audio and video stream b. The streamer client B mixes the audio stream a and the audio and video stream b.

Optionally, the plurality of co-streaming clients include one co-streaming streamer client and at least one co-streaming guest client. The target co-streaming streamer client is the co-streaming streamer client. The second audio and video streams transmitted by other co-streaming clients except for the target co-streaming streamer client in the plurality of co-streaming clients may be received as follows: a second audio and video stream transmitted by the at least one co-streaming client is received.

In the application scenario, the co-streaming streamer client corresponds to the first audio and video stream. The co-streaming guest clients correspond to the second audio and video streams. The second audio and video streams are transmitted to the co-streaming streamer client. The co-streaming streamer client mixes the first audio and video stream and the second audio and video streams. Illustratively, the plurality of co-streaming clients include one co-streaming streamer client and two co-streaming guest clients, that is, a streamer client A, a guest client B and a guest client C respectively. An audio and video stream a of the streamer client A is provided. An audio and video stream b of the guest client B is provided, and the audio and video stream b is transmitted to the streamer client A. An audio and video stream c of the guest client C is provided, and the audio and video stream c is transmitted to the streamer client A. The streamer client A mixes the audio and video stream a, the audio and video stream b, and the audio and video stream c, and may transmit the mixed stream to the guest client B and the guest client C, such that the mixed stream is played/displayed on the streamer client A, the guest client B, and the guest client C.

Optionally, the plurality of co-streaming clients include a plurality of co-streaming streamer clients and at least one co-streaming guest client. The target co-streaming streamer client is any co-streaming streamer client in the plurality of co-streaming streamer clients. The second audio and video streams transmitted by the other co-streaming clients except for the target co-streaming streamer client in the plurality of co-streaming clients may be received as follows: second audio and video streams transmitted by a co-streaming guest client corresponding to the target co-streaming streamer client and other co-streaming streamer clients except for the target co-streaming streamer client are received.

In the application scenario, for each co-streaming streamer client, its audio and video stream is taken as the first audio and video stream. Audio and video streams received from the other co-streaming streamer clients and the co-streaming guest clients (opposite sides) are taken as the second audio and video streams. Finally, the first audio and video stream and the second audio and video streams are mixed. Illustratively, the plurality of co-streaming clients include two co-streaming streamer clients and two co-streaming guest clients, that is, a streamer client A, a streamer client B, a guest client C and a guest client D respectively. The guest client C is located in a live room of the streamer client A, and the guest client D is located in a live room of the streamer client B. An audio and video stream a of the streamer client A is provided, and the audio and video stream a is transmitted to the streamer client B. An audio stream b of the streamer client B is provided, and the audio and video stream b is transmitted to the streamer client A. An audio and video stream c of the guest client C is provided, and the audio and video stream c is transmitted to the streamer client A and the streamer client B. An audio and video stream d of the guest client D is provided, and the audio and video stream d is transmitted to the streamer client A and the streamer client B. The streamer client A mixes the audio and video stream a, the audio and video stream b, the audio and video stream c, and the audio and video stream d, such that the mixed stream is played/displayed on the streamer client A, and the mixed stream may be transmitted to the guest client C. Thus the mixed stream is played/displayed on the streamer client A and the guest client C. The streamer client B mixes the audio and video stream a, the audio and video stream b, the audio and video stream c, and the audio and video stream d, and may transmit the mixed stream to the guest client D. Thus the mixed stream is played/displayed on the streamer client B and the guest client D.

Optionally, the plurality of pieces of subtitle information may be transmitted to the target client as follows: the plurality of pieces of subtitle information are added to the audio and video mixed stream; and the audio and video mixed stream with the plurality of pieces of subtitle information is transmitted to the target client.

The audio and video mixed stream is the audio and video mixed stream corresponding to the plurality of co-streaming clients. In the example, in a case that the method is performed by the target co-streaming client, the audio and video mixed stream with the plurality of pieces of subtitle information may be transmitted to the target client as follows: first, the audio and video mixed stream with the plurality of pieces of subtitle information is added is transmitted to a server, and then the server forwards the audio and video mixed stream to the target client.

Specifically, the plurality of pieces of subtitle information may be added to the audio and video mixed stream as follows: the plurality of pieces of subtitle information are added to the audio and video mixed stream as Supplementary Enhancement Information (SEI), to transmit the subtitle information to the target client while pushing the stream to the target client. In the example, the plurality of pieces of subtitle information are transmitted to the target client through the audio and video mixed stream, such that the audio and video streams and the subtitle information can be guaranteed to be displayed synchronously on the target client, and viewing experience of a user is improved.

Optionally, the plurality of pieces of subtitle information are transmitted to the target client, such that the target client displays the subtitle information differently according to the co-streaming client identifiers and/or the object identifiers. Specifically, the plurality of pieces of subtitle information are transmitted to the target client, such that the target client displays the subtitle information in microphone position areas corresponding to the co-streaming client identifiers and/or the object identifiers, in peripheries of the microphone position areas, or at a position associated with the co-streaming client identifiers and/or the object identifiers according to the co-streaming client identifiers and/or the object identifiers.

The position associated with the co-streaming client identifiers and/or the object identifiers may be determined according to an association relation between a preconfigured position and the co-streaming client identifiers and/or the object identifiers.

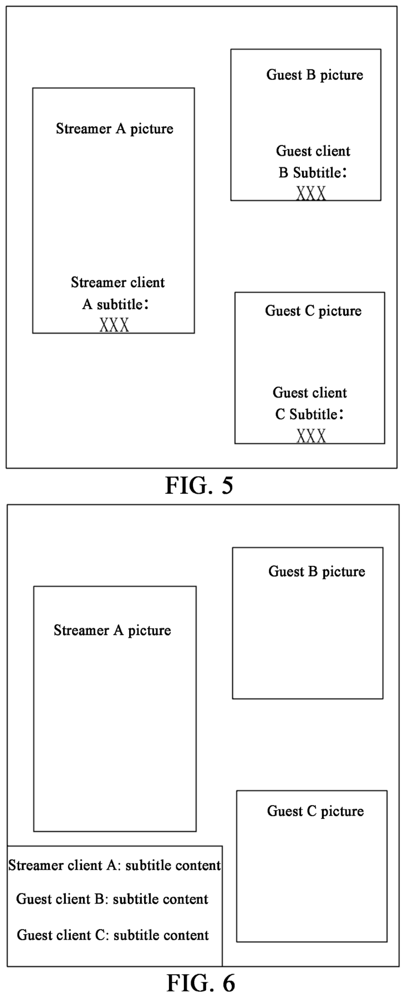

In the example, a plurality of users joining the co-streaming correspond to different microphone position areas in a live interface, and the users joining the co-streaming corresponding to the subtitle information may be determined through the co-streaming client identifiers and/or the object identifiers, such that the subtitle information is displayed in the corresponding microphone position areas, and accuracy of subtitle information display is improved. Illustratively, FIG. 5 is a schematic diagram of displaying subtitle information in the example. Assuming that participants in the co-streaming include a streamer client A, a guest client B and a guest client C. Subtitle text received by the target client is {"identifier of streamer client A": "subtitle content", "identifier of guest client B": "subtitle content", and "identifier of guest client C": "subtitle content"}. The target client displays a subtitle content of the streamer client A in a microphone position area where the streamer client A is located, displays a subtitle content of the guest client B in a microphone position area where the guest client B is located, and displays a subtitle content of the guest client C in a microphone position area where the guest client C is located.

Optionally, the plurality of pieces of subtitle information are transmitted to the target client, such that the target client displays the subtitle information differently according to the co-streaming client identifiers and/or the object identifiers. Specifically, the plurality of pieces of subtitle information are transmitted to the target client, such that the target client displays the subtitle information and corresponding client identifiers and/or object identifiers after splicing according to the object identifiers.

Assuming that the subtitle information carries an object identifier, the object identifier and the subtitle information may be spliced. In the example, a subtitle display box may be set in a live interface, and subtitle information spliced with an object identifier is displayed in the subtitle display box. Illustratively, FIG. 6 is a schematic diagram of displaying subtitle information in the example. Assuming that participants in the co-streaming include a streamer client A, a guest client B and a guest client C. Subtitle text received by the target client is {"identifier of streamer client A": "subtitle content", "identifier of guest client B": "subtitle content", and "identifier of guest client C": "subtitle content"}. The subtitle information is spliced with the corresponding object identifiers to obtain: streamer client A: subtitle content; guest client B: subtitle content; guest client C: subtitle content. The spliced subtitle information is displayed in the subtitle box.

According to the technical solution of the example of the disclosure, a plurality of pieces of subtitle information corresponding to a plurality of co-streaming clients are obtained, where the subtitle information carries co-streaming client identifiers and/or object identifiers corresponding to the co-streaming clients, and the subtitle information is determined by audio data of the co-streaming clients; and the plurality of pieces of subtitle information are transmitted to a target client, such that the target client displays the plurality of pieces of subtitle information differently according to the co-streaming client identifiers and/or the object identifiers. According to the method for processing information provided in the example of the disclosure, each co-streaming client determines subtitle information corresponding to its audio data respectively, and then transmits the subtitle information to the target client for differentiated display, such accuracy of subtitle display in a co-streaming process can be improved.

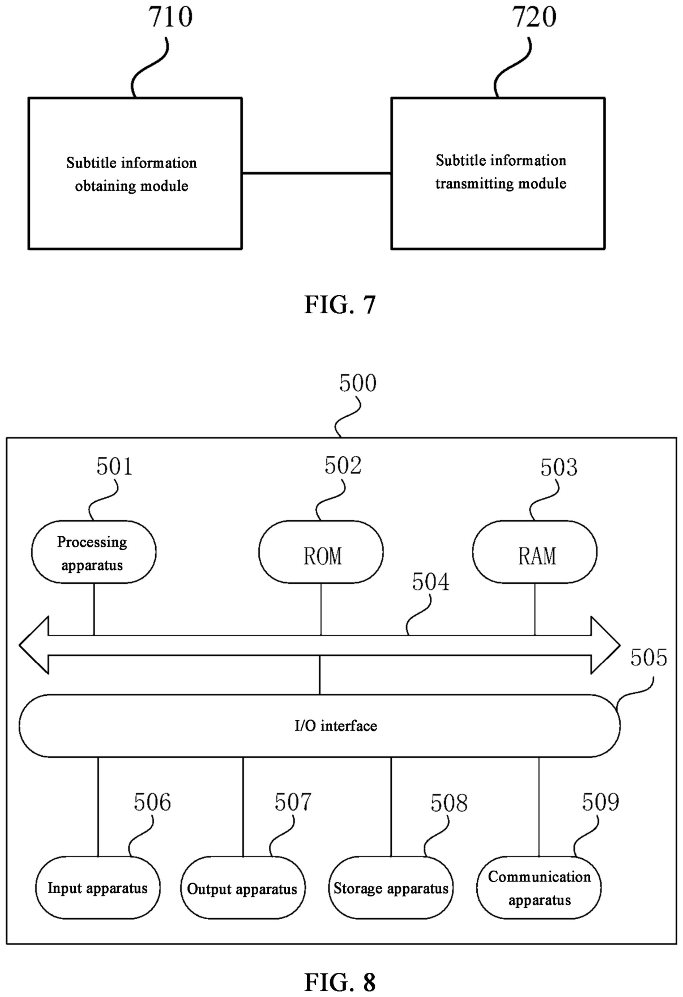

FIG. 7 is a schematic structural diagram of an apparatus for processing information according to an example of the disclosure. As shown in FIG. 7, the apparatus includes:
a subtitle information obtaining module 710 configured to obtain a plurality of pieces of subtitle information corresponding to a plurality of co-streaming clients, where the subtitle information carries co-streaming client identifiers and/or object identifiers corresponding to the co-streaming clients, and the subtitle information is determined by audio data of the co-streaming clients; and
a subtitle information transmitting module 720 configured to transmit the plurality of pieces of subtitle information to a target client, such that the target client displays the plurality of pieces of subtitle information differently according to the co-streaming client identifiers and/or the object identifiers.

Optionally, the plurality of co-streaming clients include a target co-streaming streamer client. The method is executed by the target co-streaming streamer client.

The subtitle information obtaining module 710 is further configured to determine first subtitle information according to audio data of the target co-streaming streamer client; and receive second subtitle information transmitted by other co-streaming clients except for the target co-streaming streamer client in the plurality of co-streaming clients.

Optionally, the plurality of co-streaming clients are a plurality of co-streaming streamer clients, and the target co-streaming streamer client is any co-streaming streamer client in the plurality of co-streaming streamer clients.

The subtitle information obtaining module 710 is further configured to receive second subtitle information transmitted by other co-streaming streamer clients except for the target co-streaming streamer client in the plurality of co-streaming streamer clients.

Optionally, the subtitle information transmitting module 720 is further configured to transmit the first subtitle information and the second subtitle information to an audience client corresponding to the target co-streaming streamer client.

Optionally, the plurality of co-streaming clients includes one co-streaming streamer client and at least one co-streaming guest client, and the target co-streaming streamer client is the co-streaming streamer client.

The subtitle information obtaining module 710 is further configured to receive second subtitle information transmitted by the at least one co-streaming guest client.

Optionally, the subtitle information transmitting module 720 is further configured to transmit the first subtitle information and the second subtitle information to an audience client corresponding to the target co-streaming streamer client and the at least one co-streaming guest client.

Optionally, the plurality of co-streaming clients include a plurality of co-streaming streamer clients and at least one co-streaming guest client, and the target co-streaming streamer client is any co-streaming streamer client in the plurality of co-streaming streamer clients.

The subtitle information obtaining module 710 is further configured to receive second subtitle information transmitted by other co-streaming streamer clients except for the target co-streaming streamer client in the plurality of co-streaming clients and the at least one co-streaming guest client.

Optionally, the subtitle information transmitting module 720 is further configured to transmit the first subtitle information and the second subtitle information to an audience client corresponding to the target co-streaming streamer client and a co-streaming guest client corresponding to the target co-streaming streamer client.

Optionally, the subtitle information obtaining module 710 is further configured to:
receive subtitle information transmitted respectively by the plurality of co-streaming clients, and obtain the plurality of pieces of subtitle information.

Optionally, the apparatus further includes: an audio and video mixed stream obtaining module configured to obtain an audio and video mixed stream corresponding to the plurality of co-streaming clients.

Optionally, the plurality of co-streaming clients include a target co-streaming streamer client. The method is performed by the target co-streaming streamer client. The audio and video mixed stream includes a first audio and video stream and a second audio and video stream.

The audio and video mixed stream obtaining module is further configured to:
obtain the first audio and video stream of the target co-streaming streamer client; and
receive second audio and video streams transmitted by other co-streaming clients except for the target co-streaming streamer client in the plurality of co-streaming clients.

Optionally, the plurality of co-streaming clients are a plurality of co-streaming streamer clients, and the target co-streaming streamer client is any co-streaming streamer client in the plurality of co-streaming streamer clients.

The audio and video mixed stream obtaining module is further configured to:
receive second audio and video streams transmitted by other co-streaming streamer clients except for the target co-streaming streamer client in the plurality of co-streaming streamer clients.

Optionally, the plurality of co-streaming clients include one co-streaming streamer client and at least one co-streaming guest client, and the target co-streaming streamer client is the co-streaming streamer client.

The audio and video mixed stream obtaining module is further configured to:
receive a second audio and video stream transmitted by the at least one co-streaming guest client.

Optionally, the plurality of co-streaming clients include a plurality of co-streaming streamer clients and at least one co-streaming guest client, and the target co-streaming streamer client is any co-streaming streamer client in the plurality of co-streaming streamer clients.

The audio and video mixed stream obtaining module is further configured to:
receive second audio and video streams transmitted by a co-streaming guest client corresponding to the target co-streaming streamer client and other co-streaming streamer clients except for the target co-streaming streamer client.

Optionally, the subtitle information transmitting module 720 is further configured to:
add the plurality of pieces of subtitle information to the audio and video mixed stream, wherein the audio and video mixed stream is the audio and video mixed stream corresponding to the plurality of co-streaming clients; and
transmit the audio and video mixed stream with the plurality of pieces of subtitle information to the target client.

Optionally, the subtitle information transmitting module 720 is further configured to:
add the plurality of pieces of subtitle information as supplementary enhancement information (SEI) to the audio and video mixed stream.

Optionally, the subtitle information transmitting module 720 is further configured to:
transmit the plurality of pieces of subtitle information to the target client, such that the target client displays the subtitle information in microphone position areas corresponding to the co-streaming client identifiers and/or the object identifiers or at a position associated with the co-streaming client identifiers and/or the object identifiers according to the co-streaming client identifiers and/or the object identifiers.

Optionally, the subtitle information transmitting module 720 is further configured to:
transmit the plurality of pieces of subtitle information to the target client, such that the target client displays the subtitle information and corresponding co-streaming client identifiers and/or object identifiers after splicing according to the co-streaming client identifiers and/or the object identifiers.

The apparatus for processing information provided in the example of the disclosure may execute the method for processing information provided in any example of the disclosure, and has corresponding functional modules and beneficial effects for executing the method.

It should be noted that the units and modules included in the apparatus are only divided according to functional logic, but are not limited to the above division, as long as corresponding functions can be implemented. Moreover, the specific names of the functional units are only used for distinguishing one another, and are not intended to limit the scope of protection of the examples of the disclosure.

FIG. 8 is a schematic structural diagram of an electronic device according to an example of the disclosure. With reference to FIG. 8 below, a schematic structural diagram of an electronic device (for example, a terminal device or a server in FIG. 8) 500 suitable for implementing an example of the disclosure is shown. The terminal device in the example of the disclosure may include, but is not limited to, mobile terminals such as a mobile phone, a notebook computer, a digital broadcast receiver, a personal digital assistant (PDA), a portable android device (PAD), a portable multimedia player (PMP), an in-vehicle terminal (for example, an in-vehicle navigation terminal), etc., and fixed terminals such as a digital television (TV), a desktop computer, etc. The electronic device illustrated in FIG. 8 is merely an instance and should not impose any limitation on the functions and scope of use of the examples of the disclosure.

As shown in FIG. 8, the electronic device 500 may include a processing apparatus (for example, a central processing unit, and a graphics processing unit) 501 that may execute various appropriate actions and processes according to programs stored in a read-only memory (ROM) 502 or programs loaded from a storage apparatus 508 into a random-access memory (RAM) 503. The RAM 503 also stores various programs and data needed for the operations of the electronic device 500. The processing apparatus 501, the ROM 502, and the RAM 503 are connected to one another by means of a bus 504. An input/output (I/O) interface 505 is also connected to the bus 504.

Typically, the following apparatuses may be connected to the I/O interface 505: an input apparatus 506 including a touch screen, a touch pad, a keyboard, a mouse, a camera, a microphone, an accelerometer, a gyroscope, etc.; an output apparatus 507 including a liquid crystal display (LCD), a speaker, a vibrator, etc.; a storage apparatus 508 including a magnetic tape, a hard disk, etc.; and a communication apparatus 509. The communication apparatus 509 may allow the electronic device 500 to be in wireless or wired communication with other devices to exchange data. While the FIG. 8 illustrates an electronic device 500 having various apparatuses, it should be understood that not all of the illustrated apparatuses are required to be implemented or provided. More or fewer apparatuses may alternatively be implemented or provided.

In particular, according to examples of the disclosure, a processes described above with reference to the flowcharts may be implemented as a computer software program. For example, examples of the disclosure include a computer program product. The computer program product includes a computer program carried on a non-transitory computer-readable medium, and the computer program includes a program code for executing the method illustrated in the flowchart. In such examples, the computer program may be downloaded and installed from a network by means of the communication apparatuses 509, or installed from the storage apparatus 508, or installed from the ROM 502. When executed by the processing apparatus 501, the computer program executes the above-described functions defined in the method of the example of the disclosure.

The names of messages or information exchanged between a plurality of apparatuses in the embodiments of the disclosure are merely for illustrative purposes, and are not intended to limit the scope of these messages or information.

The electronic device provided in the example of the disclosure belongs to the same invention concept as the method for processing information provided in the above examples, reference may be made to the above examples for technical details not described in detail in the example, and the example has the same beneficial effect as the above examples.

The example of the disclosure provides a computer storage medium, storing a computer program. When executed by a processor, the program implements the above method for processing information provided in the above examples.

It should be noted that the computer-readable medium in the disclosure may be a computer-readable signal medium or a computer-readable storage medium, or any combination of a computer-readable signal medium and a computer-readable storage medium. The computer-readable storage medium may include, but is not limited to, an electronic, magnetic, optical, electromagnetic, infrared, or semiconductor system, apparatus, or device, or any combination of the foregoing. More specific instance of the computer-readable storage medium may include, but is not limited to, an electrical connection based on one or more wires, a portable computer diskette, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing. In the disclosure, the computer-readable storage medium may be any tangible medium that includes or stores a program for use by or in conjunction with an instruction execution system, apparatus, or device. In the disclosure, the compute-readable signal medium may include a data signal propagating in a baseband or as part of a carry wave and carrying a computer-readable program code. Such a propagated data signal may have a variety of forms and may include, but is not limited to, an electromagnetic signal, an optical signal, or any suitable combination of the foregoing. The computer-readable signal medium may also be any computer-readable medium besides a computer-readable storage medium. The computer-readable signal medium can transmit, propagate, or transfer a program for use by or in conjunction with an instruction execution system, apparatus, or device. A program code included on a computer-readable medium may be transferred by means of any suitable medium, including, but not limited to, wires, fiber optic cables, radio frequency (RF), etc., or any suitable combination of the foregoing.

In some embodiments, a client and a server may communicate by using any currently known or future developed network protocol, such as a hypertext transfer protocol (HTTP), and may be interconnected with any form or medium of digital data communication (for example, a communication network). Instances of communication networks include a local area network (LAN), a wide area network (WAN), Internet work (for example, the Internet), and an end-to-end network (for example, an ad hoc end-to-end network), as well as any currently known or future developed network.

The computer-readable medium may be included in the above electronic device, and may also exist independently without being assembled into the electronic device.

The computer-readable medium carries one or more programs. When the one or more programs are executed by the electronic device, the electronic device is caused to:
The computer-readable medium carries one or more programs. When the one or more programs are executed by the electronic device, the electronic device is caused to: obtain a plurality of pieces of subtitle information corresponding to a plurality of co-streaming clients, wherein the subtitle information carries co-streaming client identifiers and/or object identifiers corresponding to the co-streaming clients, and the subtitle information is determined by audio data of the co-streaming clients; and transmit the plurality of pieces of subtitle information to a target client, such that the target client displays the plurality of pieces of subtitle information differently according to the co-streaming client identifiers and/or the object identifiers.

A computer program code for performing operations of the disclosure may be written in one or more programming languages, or combinations of the programming languages. The programming languages include, but are not limited to, object-oriented programming languages, such as Java, Smalltalk, and C++, and further include conventional procedural programming languages, such as the C programming language or similar programming languages. The program code may be executed entirely on a user computer, partly on a user computer, as a stand-alone software package, partly on a user computer and partly on a remote computer, or entirely on a remote computer or server. In the case involving a remote computer, the remote computer may be connected with a user computer through any kind of network, including a local area network (LAN) or a wide area network (WAN), or may be connected with an external computer (for example, connected through the Internet by using an Internet service provider).

The flowcharts and block diagrams in the accompanying drawings illustrate the architecture, functionality, and operations possibly implemented by the systems, methods, and computer program products according to various examples of the disclosure. In this regard, each block in the flowcharts or block diagrams may represent a module, a program segment, or part of a code, and a module, a program segment, or part of a code includes one or more executable instructions for implementing a specified logical function. It should also be noted that in some alternative implementations, a function noted in a block may occur in an order different from an order noted in the figures. For example, two consecutive blocks may actually be executed substantially in parallel, or in a reverse order sometimes, depending on a function involved. It should also be noted that each block in the block diagrams and/or flowcharts, and combinations of blocks in the block diagrams and/or flowcharts, can be implemented by special purpose hardware-based systems that perform specified functions or operations, or can be implemented by combinations of special purpose hardware and computer instructions.

The units described in the example of the disclosure may be implemented in software or hardware. The name of a unit does not constitute a limitation on the unit itself under certain circumstances. For example, the first obtaining unit may also be described as "a unit obtaining at least two internet protocol addresses".

The functions described above herein may be executed at least partially by one or more hardware logic components. For example, without limitation, exemplary types of the hardware logic components that may be used include: a field programmable gate array (FPGA), an application specific integrated circuit (ASIC), an application specific standard product (ASSP), a system on chip (SOC), a complex programmable logic device (CPLD), etc.

In the context of the present disclosure, the machine-readable medium may be a tangible medium that may include or store a program for use by or in conjunction with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific instance of the machine-readable storage medium may include an electrical connection based on one or more wires, a portable computer diskette, a hard disk, a random-access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

The above description is merely illustrative of preferred examples of the disclosure and principles of the technology employed. It should be understood by those skilled in the art that the disclosed scope involved in the disclosure is not limited to the technical solutions in which the above-described technical features are specifically combined, but encompasses other technical solutions in which the above-described technical features or equivalent features thereof are arbitrarily combined without departing from the concept of the disclosure, for example, technical solutions formed by interchanging the features described above with (non-limitative) technical features disclosed in the disclosure that have similar functions.

Furthermore, although operations are depicted in a particular order, this should not be understood as requiring that such operations be executed in the particular order shown or in a sequential order. In certain circumstances, multitasking and parallel processing may be advantageous. Similarly, although several specific implementation details are included in the above discussion, these details should not be construed as limitations on the scope of the disclosure. Some features that are described in the context of separate examples may also be implemented in combination in a single example. On the contrary, various features described in the context of a single example can also be implemented in multiple examples separately or in any suitable sub-combination manner.

Although the subject matter has been described in language specific to structural features and/or methodological logical actions, it should be understood that the subject matter defined in the appended claims is not necessarily limited to the specific features or actions described above. On the contrary, the specific features and actions described above are merely instance forms of implementing the claims.

## Claims

1. A method for processing information, comprising:
obtaining a plurality of pieces of subtitle information corresponding to a plurality of co-streaming clients, wherein the subtitle information carries co-streaming client identifiers and/or object identifiers corresponding to the co-streaming clients, and the subtitle information is determined by audio data of the co-streaming clients; and
transmitting the plurality of pieces of subtitle information to a target client, such that the target client displays the plurality of pieces of subtitle information differently according to the co-streaming client identifiers and/or the object identifiers.

2. The method according to claim **1,** wherein the plurality of co-streaming clients comprise a target co-streaming streamer client, and the method is performed by the target co-streaming streamer client; and
wherein the obtaining a plurality of pieces of subtitle information corresponding to the plurality of co-streaming clients comprises: determining first subtitle information according to audio data of the target co-streaming streamer client; and
receiving second subtitle information transmitted by other co-streaming clients except for the target co-streaming streamer client of the plurality of co-streaming clients.

3. The method according to claim 2, wherein the plurality of co-streaming clients are a plurality of co-streaming streamer clients, and the target co-streaming streamer client is any co-streaming streamer client among the plurality of co-streaming streamer clients;
wherein receiving the second subtitle information transmitted by other co-streaming clients except for the target co-streaming streamer client of the plurality of co-streaming clients comprises: receiving second subtitle information transmitted by other co-streaming streamer clients except for the target co-streaming streamer client of the plurality of co-streaming streamer clients; and
wherein transmitting the plurality of pieces of subtitle information to the target client comprises: transmitting the first subtitle information and the second subtitle information to an audience client corresponding to the target co-streaming streamer client.

4. The method according to claim 2, wherein the plurality of co-streaming clients comprise a co-streaming streamer client and at least one co-streaming guest client, and the target co-streaming streamer client is the co-streaming streamer client;
wherein receiving the second subtitle information transmitted by other co-streaming clients except for the target co-streaming streamer client of the plurality of co-streaming clients comprises: receiving the second subtitle information transmitted by the at least one co-streaming guest client; and
wherein transmitting the plurality of pieces of subtitle information to the target client comprises: transmitting the first subtitle information and the second subtitle information to an audience client corresponding to the target co-streaming streamer client and the at least one co-streaming guest client.

5. The method according to claim 2, wherein the plurality of co-streaming clients comprise a plurality of co-streaming streamer clients and at least one co-streaming guest client, and the target co-streaming streamer client is any co-streaming streamer client among the plurality of co-streaming streamer clients;
wherein receiving the second subtitle information transmitted by other co-streaming clients except for the target co-streaming streamer client of the plurality of co-streaming clients comprises: receiving the second subtitle information transmitted by other co-streaming streamer clients except for the target co-streaming streamer client of the plurality of co-streaming clients and the at least one co-streaming guest client; and
wherein transmitting the plurality of pieces of subtitle information to the target client comprises: transmitting the first subtitle information and the second subtitle information to an audience client corresponding to the target co-streaming streamer client and a co-streaming guest client corresponding to the target co-streaming streamer client.

6. The method according to claim 1, wherein the method is performed by a server, wherein obtaining the plurality of pieces of subtitle information corresponding to the plurality of co-streaming clients comprises:
receiving subtitle information transmitted respectively by the plurality of co-streaming clients to obtain the plurality of pieces of subtitle information.

7. The method according to claim 1, further comprising: obtaining an audio and video mixed stream corresponding to the plurality of co-streaming clients.

8. The method according to claim 7, wherein the plurality of co-streaming clients comprise a target co-streaming streamer client, the method is performed by the target co-streaming streamer client, and the audio and video mixed stream comprises a first audio and video stream and a second audio and video stream; and
wherein obtaining the audio and video mixed stream corresponding to the plurality of co-streaming clients comprises:
obtaining a first audio and video stream of the target co-streaming streamer client; and
receiving second audio and video streams transmitted by other co-streaming clients except for the target co-streaming streamer client of the plurality of co-streaming clients.

9. The method according to claim 8, wherein the plurality of co-streaming clients are a plurality of co-streaming streamer clients, and the target co-streaming streamer client is any co-streaming streamer client among the plurality of co-streaming streamer clients; and
wherein receiving the second audio and video streams transmitted by other co-streaming clients except for the target co-streaming streamer client of the plurality of co-streaming clients comprises:
receiving second audio and video streams transmitted by other co-streaming streamer clients except for the target co-streaming streamer client of the plurality of co-streaming streamer clients.

10. The method according to claim 8, wherein the plurality of co-streaming clients comprise a co-streaming streamer client and at least one co-streaming guest client, and the target co-streaming streamer client is the co-streaming streamer client; and
wherein receiving the second audio and video streams transmitted by other co-streaming clients except for the target co-streaming streamer client of the plurality of co-streaming clients comprises:
receiving a second audio and video stream transmitted by the at least one co-streaming guest client.

11. The method according to claim 8, wherein the plurality of co-streaming clients comprise a plurality of co-streaming streamer clients and at least one co-streaming guest client, and the target co-streaming streamer client is any co-streaming streamer client among the plurality of co-streaming streamer clients; and
wherein receiving the second audio and video streams transmitted by other co-streaming clients except for the target co-streaming streamer client of the plurality of co-streaming clients comprises:
receiving second audio and video streams transmitted by a co-streaming guest client corresponding to the target co-streaming streamer client and other co-streaming streamer clients except for the target co-streaming streamer client.

12. The method according to claim 7, wherein transmitting the plurality of pieces of subtitle information to the target client comprises:
adding the plurality of pieces of subtitle information to the audio and video mixed stream, wherein the audio and video mixed stream is the audio and video mixed stream corresponding to the plurality of co-streaming clients; and
transmitting the audio and video mixed stream with the plurality of pieces of subtitle information to the target client.

13. The method according to claim 12, wherein adding the plurality of pieces of subtitle information to the audio and video mixed stream comprises:
adding the plurality of pieces of subtitle information as supplementary enhancement information (SEI) to the audio and video mixed stream.

14. The method according to claim 1, wherein transmitting the plurality of pieces of subtitle information to the target client, such that the target client displays the plurality of pieces of subtitle information differently according to the co-streaming client identifiers and/or the object identifiers comprises:
transmitting the plurality of pieces of subtitle information to the target client, such that the target client displays the subtitle information in microphone position areas corresponding to the co-streaming client identifiers and/or the object identifiers or at positions associated with the co-streaming client identifiers and/or the object identifiers according to the co-streaming client identifiers and/or the object identifiers.

15. The method according to claim 1, wherein transmitting the plurality of pieces of subtitle information to the target client, such that the target client displays the plurality of pieces of subtitle information differently according to the co-streaming client identifiers and/or the object identifiers comprises:
transmitting the plurality of pieces of subtitle information to the target client, such that the target client splices and displays the subtitle information and corresponding co-streaming client identifiers and/or object identifiers according to the client identifiers and/or the object identifiers.

16. An apparatus for processing information, comprising:
a subtitle information obtaining module configured to obtain a plurality of pieces of subtitle information corresponding to a plurality of co-streaming clients, wherein the subtitle information carries co-streaming client identifiers and/or object identifiers corresponding to the co-streaming clients, and the subtitle information is determined by audio data of the co-streaming clients; and
a subtitle information transmitting module configured to transmit the plurality of pieces of subtitle information to a target client, such that the target client displays the plurality of pieces of subtitle information differently according to the object identifiers.

17. An electronic device, comprising:
one or more processors, and
a storage apparatus configured to store one or more programs, wherein
the one or more programs, when executed by the one or more processors, causes the one or more processors to perform the method for processing information according to any of claims 1-15.

18. A storage medium, comprising a computer-executable instruction, the computer-executable instruction, when performed by a computer processor, causes the computer processor to perform the method for processing information according to any of claims 1-15 .
